# EUROPEAN PATENT APPLICATION

(11) **EP 1 498 907 A1**
(43) Date of publication of application: **19.01.2005**
(21) Application number: 03717645.0
(22) Date of filing: 18.04.2003
(51) Int. Cl.: G21F 1/06, G21F 3/00, C03C 4/08, C03C 3/087, C03C 3/085

(54) **RADIATION SHIELDING GLASS AND RADIATION SHIELDING ARTICLE USING THE SAME**

(30) Priority: 23.04.2002 JP 2002120971; 23.04.2002 JP 2002120981
(71) Applicant: Nippon Electric Glass Co., Ltd., Otsu-shi, Shiga 520-8639 (JP)
(72) Inventor: MURE, Yasushi, c/o Nippon Electric Glass Co., Ltd., Otsu-shi, Shiga 520-8639 (JP); YAMAJI, Michio Nippon Electric Glass Co., Ltd., Otsu-shi, Shiga 520-8639 (JP); YAMAGUCHI, Yukihiko Nippon Electric Glass Co.,Ltd., Otsu-shi, Shiga 520-8639 (JP)
(74) Representative: Tetzner, Michael, Dipl.-Ing.
(86) International application number: PCT/JP2003/004967
(87) International publication number: WO 2003/092016

(57) **Abstract**

A radiation shielding article 10 is in the form of a plurality of radiation shielding glasses 11 that are stuck together with resin films 12 therebetween, respectively. Each radiation shielding glass 11 is made of glass essentially free of Pb and having a lead equivalent of 0.03 mmPb/mm or more relative to an X-ray of 100kV. Further, each radiation shielding glass 11 has a composition containing, by mass%, 50 to 65 % of SiO₂, 5 to 15 % of Al₂O₃, 0.1 to 9 % of ZrO₂, 10 to 27 % of MgO+CaO+SrO+BaO+ZnO, and 7 to 15 % of Li₂O+Na₂O+K₂O.

## Description

### Technical Field

This invention relates to a radiation shielding article such as a radiation shielding window or a radiation shielding protection screen mainly in a facility handling radiation of low energy at 100kV or less, and to a radiation shielding glass for use therein.

### Background Art

In a facility handling low-energy radiation, such as a radiological diagnostic facility, a radiation shielding article, such as a radiation shielding window or a radiation shielding protection screen, is required to have an ability of shielding radiation from a radiation source, i.e. a so-called radiation shielding ability, and a high transparency enabling visibility of the subject of examination through a material thereof. Therefore, a radiation shielding member made of glass or synthetic resin containing a large amount of Pb has conventionally been used in the form of a single plate as a radiation shielding article.

However, there has been a problem that since Pb is a toxic substance, the radiation shielding article containing the large amount of Pb is liable to cause environmental pollution due to spilling or scattering of a raw material containing Pb in the production thereof.

Further, when a glass containing a large amount of Pb is used as a radiation shielding window or a radiation shielding protection screen, "fogging" sometimes occurs on the glass surface after cleaning the glass surface for removing dirt thereon. There has also been a problem that the transparency of the radiation shielding window or the radiation shielding protection screen is extremely reduced due to this "fogging".

Further, since a glass containing a large amount of Pb has a low surface hardness, there were those instances where cracks were liable to occur on the surface in the machining process of polishing, cutting, or the like so that the glass was broken due to the cracks. When the glass was broken, fragments thereof were scattered and thus it was very dangerous.

Although a synthetic resin containing a large amount of Pb is hardly broken even if cracks occur, since its surface hardness is quite low, cracks are easily generated so that its transparency tends to be reduced due to the cracks.

It is an object of this invention to provide a radiation shielding article which does not cause environmental pollution, which is reluctant to have cracks, and of which fragments are not scattered even if a glass is broken, and a radiation shielding glass for use therein.

### Disclosure of the Invention

According to this invnetion, there is provided a radiation shielding article which is in the form of plural radiation shielding glasses that are stuck together with a resin film therebetween. In the radiation shielding article, each of the radiation shielding glasses is essentially free of Pb and has a lead equivalent of 0.03 mmPb/mm or more relative to an X-ray of 100kV.

According to this invnetion, there is provided a radiation shielding. glass which has a composition containing 40 to 70 mass% of SiO₂ and 4.1 to 15 mass% of Al₂O₃ and being essentially free of Pb, and a lead equivalent of 0.03 mmPb/mm or more relative to an X-ray of 100kV.

### Brief Description of the Drawings

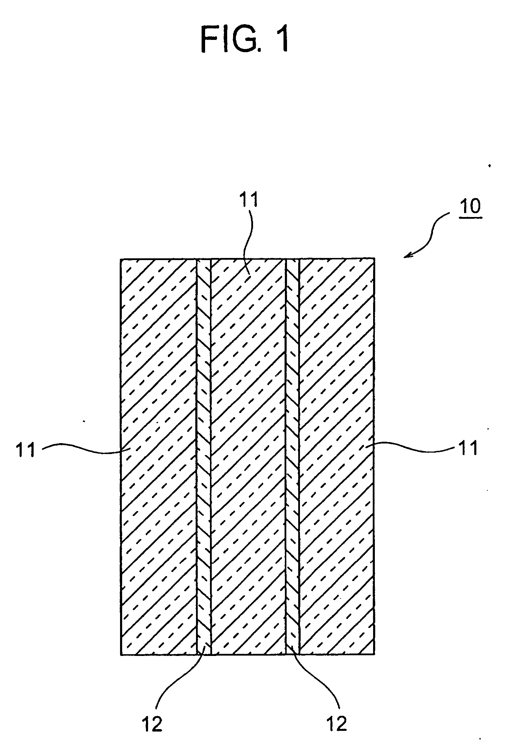

Fig. 1 is an explanatory diagram of a radiation shielding article of this invention.

### Best Mode for Carrying Out the Invention

At the outset, this invention will be described in further detail.

A radiation shielding article of this invention is in the form of plural radiation shielding glasses that are stuck together with a resin film therebetween. Therefore, even if the radiation shielding glasses are broken, fragments thereof are not scattered, and further, such a radiation shielding article has an ability to shield neutron radiation in addition to X-rays and γ-rays. Specifically, this is because, when the radiation shielding glasses are broken, the fragments thereof are held by the resin film, while, since the resin film contains a large amount of hydrogen, the neutrons are captured by the hydrogen.

Further, since each of the radiation shielding glasses is made of glass essentially free of Pb, the environmental pollution due to spilling or scattering of a raw material containing Pb is not caused in the production thereof.

Further, since each of the radiation shielding glasses is made of glass having a lead equivalent of 0.03 mmPb/mm or more relative to an X-ray of 100kV, the radiation shielding article of this invention is suitable as a radiation shielding window or a radiation shielding protection screen that protects against radiation of low energy at 100kV or less. Note that the lead equivalent represents a thickness of a lead plate having the same X-ray damping force and means that as this value becomes greater, the radiation shielding ability becomes more excellent.

On the other hand, the thickness of each radiation shielding glass is 1 to 10mm although it changes depending on a required radiation shielding ability or the number of the glasses to be used.

As the resin film for use in the radiation shielding article of this invention, use can be made of polyvinylbutyral (PVB), ethylene-vinyl acetate copolymer (EVA), fluoroplastics (THV), or the like. The thickness of the resin film is 50 to 2000µm.

Further, since the radiation shielding glass of this invention is made of glass containing 40 to 70, preferably 50 to 65, mass% of SiO₂ and 4.1 to 15, preferably 5 to 15, mass% of Al₂O₃, even when the surface is cleaned, the transparency is hardly reduced and there is no occurrence of deformation or discoloration due to water absorption. Further, since the surface hardness is high, cracks hardly occur and thus breakage or reduction in transparency due to cracks hardly occurs. Specifically, if SiO₂ is less than 40 mass%, preferably less than 50 mass%, since the chemical durability is low, "fogging" is generated after cleaning of the glass surface so that the transparency tends to be reduced, while, if SiO₂ is more than 70 mass%, preferably more than 65 mass%, the melting property tends to be deteriorated, which are thus not preferable. On the other hand, Al₂O₃ is a component that improves the surface hardness of the glass and further the chemical durability of the glass, If the content thereof is less than 4.1 mass%, preferably 5 mass%, the surface hardness is reduced so that cracks are liable to occur and breakage is liable to occur. Further, since the chemical durability is lowered, "fogging" occurs after cleaning of the glass surface so that the transparency tends to be lowered. If Al₂O₃ is more than 15 mass%, the melting property is deteriorated and the liquidus temperature tends to be high, which is thus not preferable.

Further, a specific composition of the radiation shielding glass usable in this invention is, by mass%, 50 to 65 % of SiO₂, 5 to 15 % of Al₂O₃, 0.1 to 9 % of ZrO₂, 10 to 27 % of MgO+CaO+SrO+BaO+ZnO, and 7 to 15 % of Li₂O+Na₂O+K₂O.

ZrO₂ is a component that improves the radiation shielding ability and the chemical durability of the glass, and the content thereof is 0.1 to 9 %, preferably 0.1 to 8 %. If ZrO₂ is less than 0.1 %, the radiation shielding ability is low and the chemical durability of the glass tends to be reduced, while, if it is more than 9%, a devitrification stone tends to be produced upon forming the glass so that the formation becomes difficult, which are thus not preferable.

MgO, CaO, SrO, BaO, and ZnO are components that improve the melting property of the glass. Particularly, SrO and BaO are the components excellent in effect of enhancing the radiation shielding ability. The total content of MgO, CaO, SrO, BaO, and ZnO is 10 to 27 %, preferably 15 to 25 % If the total content thereof is less than 10%, the radiation shielding ability is lowered and the melting property tends to be deteriorated. If it is more than 27%, the glass tends to be devitrified.

The contents of MgO, CaO, and ZnO are preferably all 0 to 4 %. Further, the contents of BaO and SrO are preferably both 3 to 12 %.

Li₂O, Na₂O, and K₂O are components that improve the melting property of the glass, and the total content thereof is 7 to 15 %. If the total content thereof is less than 7%, the melting property becomes difficult, while; if it is more than 15%, the chemical durability is lowered.

The contents of Li₂O; Na₂O, and K₂O are preferably 0 to 1 % 2 to 10 %, and 2 to 13 %, respectively.

Other than the foregoing components, TiO₂ may be added up to 5%, P₂O₅ up to 3%, and Sb₂O₃ and As₂O₃ up to 1 %.

The radiation shielding glass of this invention can be formed into a plate by an existing formation method, while, if the glass is formed into a plate by the use of, particularly, a float method, since it is excellent in smoothness, polishing is not required so that there is no possibility of occurrence of cracks due to the polishing.

Now, examples of this invention will be described.

This invention will be described based on the examples. Examples 1 to 4 of this invention are shown in Table 1 below, while Comparative Examples 5 to 8 are shown in Table 2 below.

Fig. 1 is an explanatory diagram of the radiation shielding article of this invention.

First, in each of Examples 1 to 4, a batch material was prepared so as to have a composition shown in Table 1. After melting it, it was formed into a plate having a thickness of 9mm by the float method, then cut into pieces each having a size of 2000x900 mm, and thereafter, cooled in an annealing furnace, thereby producing radiation shielding glasses.

Then, as shown in Fig. 1, PVB resin films 12 each having a thickness of 200µm were inserted between three radiation shielding glasses 11, respectively, then thermocompression bonding was applied thereto to produce a radiation shielding article 10.

In each of Comparative Examples 5 to 7, a batch material was prepared so as to have a composition shown in Table 2. After melting it, it was formed into a plate having a thickness of 9.5 mm by a rollout method, then cut into a size of 2000×900 mm, and thereafter, cooled in an annealing furnace, thereby producing a glass-formed member.

Then, optical polishing was applied to both sides of the glass-formed member to thereby produce a glass plate having a thickness of 9mm.

In Comparative Example 8, 100 mass parts of acrylic acid-methacrylic acid copolymer containing 20 mass% of acrylic acid and 50 mass parts of lead oxide were mixed together, then formed into a sheet. The obtained sheet was hot-pressed to thereby produce a transparent resin plate having a thickness of 9mm.

The thermal expansion coefficient α₃₀₋₃₈₀ at 30 to 380°C was measured by a dilatometer (TD-5000 manufactured by Mac Science Co., Ltd.). Further, a lead equivalent per 1mm thickness relative to an X-ray of 100kV was derived by converting a lead equivalent measured based on JIS Z 4501 into a lead equivalent per 1 mm thickness.

The surface hardness (Knoop hardness: Hk) was derived using a Knoop hardness tester by pressing with a diamond indenter under a load of 10g for 30 seconds and measuring a diagonal length of a rhombic impression.

The chemical durability was evaluated in terms of acid resistance and alkali resistance. Specifically, the glass plates and the resin plate were immersed in each of a 3 mass% HCl aqueous solution for the acid resistance and a 3 mass% NaOH aqueous solution for the alkali resistance at 25°C for 30 minutes, then the states of the surfaces were observed. When the surface was glossy with no occurrence of fogging, "ο" was given, when the surface was a little cloudy with a little occurrence of fogging, "Δ" was given, while, when the surface was obscure in white with occurrence of fogging, "×" was given.

As shown in Table 1 below, the surface hardness was high and the chemical durability was excellent in Examples 1 to 4. On the other hand, as shown in Table 2 below, the surface hardness Was low and the chemical durability was also low in Comparative Examples 5 to 8. Note that the Knoop hardness was unmeasurable in Comparative Example 8 because the surface hardness was extremely low.

**Table 1**

| | Example 1 | Example 2 | Example 3 | Example 4 |
|---|---|---|---|---|
| Composition (mass%) | | | | |
| SiO₂ | 57.2 | 63.3 | 56.9 | 55.9 |
| Al₂O₃ | 9.0 | 6.0 | 7.0 | 9.0 |
| B₂O₃ | - | - | - | - |
| MgO | 2.0 | 1.0 | 1.5 | 2.5 |
| CaO | 2.0 | 1.0 | 2.0 | 2.5 |
| SrO | 7.0 | 9.0 | 7.0 | 7.5 |
| BaO | 9.0 | 6.0 | 8.5 | 9.5 |
| ZnO | - | - | - | - |
| Li₂O | - | - | - | 0.5 |
| Na₂O | 4.0 | 3.0 | 4.5 | 2.5 |
| K₂O | 5.0 | 6.0 | 7.0 | 8.0 |
| ZrO₂ | 4.0 | 3.0 | 4.5 | 1.0 |
| TiO₂ | 0.5 | 1.5 | 0.7 | 0.2 |
| PbO | - | - | - | - |
| CeO₂ | - | - | - | - |
| Sb₂O₃ | 0.3 | 0.2 | 0.4 | 0.6 |
| As₂O₃ | - | - | - | 0.3 |
| α₃₀₋₃₈₀ × 10⁻⁷/°C | 81 | 83 | 82 | 86 |
| Lead Equivalent/mm | 0.060 | 0.050 | 0.059 | 0.060 |
| Hk (GPa) | 5.29 | 5.10 | 5.19 | 5.29 |
| Acid Resistance | ○ | ○ | ○ | ○ |
| Alkali Resistance | ○ | ○ | ○ | ○ |

**Table 2**

| | Comparative Example 5 | Comparative Example 6 | Comparative Example 7 | Comparative Example 8 |
|---|---|---|---|---|
| Composition (mass%) | | | | |
| SiO₂ | 34.0 | 56.4 | 62.5 | |
| Al₂O₃ | - | - | 2.0 | |
| B₂O₃ | 3.1 | - | - | |
| MgO | - | - | 2.0 | |
| CaO | - | 2.5 | 4.0 | |
| SrO | - | 9.4 | 8.0 | |
| BaO | 5.4 | 10.4 | 10.0 | |
| ZnO | - | 6.0 | 2.0 | acrylic acid-methacrylic acid |
| Li₂O | - | 1.0 | - | copolymer:PbO =100 : 50 |
| Na₂O | - | 4.3 | 4.0 | (mass ratio) |
| K₂O | 2.0 | 8.8 | 5.0 | |
| ZrO₂ | - | - | - | |
| TiO₂ | - | 0.5 | - | |
| PbO | 55.0 | - | - | |
| CeO₂ | - | 0.6 | 0.5 | |
| Sb₂O₃ | 0.5 | 0.1 | - | |
| As₂O₃ | - | - | - | |
| α₃₀₋₃₈₀ × 10⁻⁷/°C | 81 | 99.8 | 78 | ≒1000 |
| Lead Equivalent/mm | 0.249 | 0.072 | 0.065 | 0.050 |
| Hk (GPa) | 3.63 | 4.90 | 4.80 | unmeasurable |
| Acid Resistance | × | Δ | Δ | × |
| Alkali Resistance | ○ | ○ | Δ | × |

As described above, the radiation shielding article of this invention does not cause the environmental pollution, is hardly reduced in transparency even if the surface is cleaned, is reluctant to have cracks, and does not scatter fragments thereof even if the radiation shield glass is broken, and therefore, is suitable as a radiation shielding window or a radiation shielding protection screen that serves to shield radiation of low energy at 100kV or less.

### Industrial Applicability

As described above, the radiation shielding article of this invention using the radiation shielding glasses is most suitable as a radiation shielding window or a radiation shielding protection screen that serves to shield radiation of low energy at 100kV or less.

## Claims

1. A radiation shielding glass for use in a radiation shielding article, said radiation shielding glass being essentially free of Pb and having a composition containing 40 to 70 mass% of SiO₂ and 4.1 to 15 mass% of Al₂O₃, and a lead equivalent of 0.03 mmPb/mm or more'relative to an X-ray of 100kV.

2. A radiation shielding glass according to claim 1, wherein said radiation shielding glass has a composition containing, by mass%, 50 to 65 % of SiO₂, 5 to 15 % of Al₂O₃, 0.1 to 9 % of ZrO₂, 10 to 27 % of MgO+CaO+SrO+BaO+ZnO, and 7 to 15 % of Li₂O+Na₂O+K₂O.

3. A radiation shielding article in the form of plural radiation shielding glasses that are stuck together with a resin film therebetween, wherein each of said radiation shielding glasses is essentially free of Pb and having a lead equivalent of 0.03 mmPb/mm or more relative to an X-ray of 100kV.

4. A radiation shielding article according to claim 3, wherein each of said radiation shielding glasses has a composition containing, by mass%, 40 to 70 % of SiO₂ and 4.1 to 15 % of Al₂O₃.

5. A radiation shielding article according to claim 3, wherein each of said radiation shielding glasses has a composition containing, by mass%, 50 to 65 % of SiO₂, 5 to 15 % of Al₂O₃, 0.1 to 9 % of ZrO₂, 10 to 27 % of MgO+CaO+SrO+BaO+ZnO, and 7 to 15 % of Li₂O+Na₂O+K₂O.
